(19) Europäisches Patentamt
European Patent Office
Office européen des brevets

(11) EP 4 800 761 A1

(12) **EUROPEAN PATENT APPLICATION**

(43) Date of publication:
**02.09.2026 Bulletin 2026/36**

(21) Application number: **26158676.2**

(22) Date of filing: **16.02.2026**

(51) International Patent Classification (IPC):
***H01M 4/36*** *(2006.01)* ***H01M 4/131*** *(2010.01)*
***H01M 4/525*** *(2010.01)* ***H01M 4/58*** *(2010.01)*
***H01M 4/62*** *(2006.01)* ***H01M 10/0525*** *(2010.01)*

(52) Cooperative Patent Classification (CPC):
**H01M 4/131; H01M 4/364; H01M 4/366; H01M 4/525; H01M 4/5825; H01M 4/628; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.02.2025 KR 20250020861**

(71) Applicant: **SAMSUNG SDI CO., LTD.**
**Yongin-si, Gyeonggi-do 17084 (KR)**

(72) Inventors:
- **LEE, Minju**
  **17084 Gyeonggi-do (KR)**
- **LEE, Junsik**
  **17084 Gyeonggi-do (KR)**
- **KO, Donghyun**
  **17084 Gyeonggi-do (KR)**
- **CHO, Youngyeol**
  **17084 Gyeonggi-do (KR)**
- **KANG, Sanghyun**
  **17084 Gyeonggi-do (KR)**

(74) Representative: **Michalski Hüttermann & Partner mbB**
**Kaistraße 16A**
**40221 Düsseldorf (DE)**

# (54) POSITIVE ELECTRODE FOR RECHARGEABLE LITHIUM BATTERY AND RECHARGEABLE LITHIUM BATTERY INCLUDING THE SAME

(57) The present disclosure relates to a positive electrode for a rechargeable lithium battery, a rechargeable lithium battery including the positive electrode, and a method for manufacturing a positive electrode for a rechargeable lithium battery. The positive electrode includes a positive electrode current collector, a first positive electrode active material layer on the positive electrode current collector, and a second positive electrode active material layer on the first positive electrode active material layer. At least one of the first and second positive electrode active material layers includes a first particle and a second particle, wherein an amount of the first particle in the first positive electrode active material layer is in a range of about 55 wt% or more, and an amount of the second particle in the second positive electrode active material layer is in a range of about 55 wt% or more.

FIG. 1

ELL
Li+
COL1 AML1
10
30
COL2 AML2
20

EP 4 800 761 A1

## Description

CROSS-REFERENCE TO RELATED APPLICATION

This U.S. nonprovisional application claims priority under 35 U.S.C § 119 to Korean Patent Application No. 10-2025-0020861 filed on February 18, 2025 in the Korean Intellectual Property Office, the disclosure of which is hereby incorporated by reference in its entirety.

BACKGROUND

The present disclosure relates to a positive electrode for a rechargeable lithium battery, a rechargeable lithium battery including the positive electrode, and a method for manufacturing a positive electrode for a rechargeable lithium battery.

With increasing presence of battery-powered electronic devices such as, e.g., mobile phones, notebook computers, and electric vehicles, the demand for rechargeable batteries with high energy density and large capacity has been increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY

The present disclosure describes a positive electrode for a rechargeable lithium battery having improved high-temperature storage characteristics and fast-charging characteristics, and a rechargeable lithium battery including the positive electrode.

The present disclosure also describes a method for manufacturing a positive electrode for a rechargeable lithium battery having improved high-temperature storage characteristics and fast-charging characteristics.

According to an example embodiment of the present disclosure, a positive electrode for a rechargeable lithium battery may include a positive electrode current collector, a first positive electrode active material layer on the positive electrode current collector, and a second positive electrode active material layer on the first positive electrode active materials. Each of, or at least one of the first and second positive electrode active material layers may contain a first particle and a second particle. The first particle may include a compound defined by Formula 1, the second particle may include a compound defined by Formula 2, an amount of the first particle in the first positive electrode active material layer may be in a range of about 55 wt% or more with respect to 100 wt% of the first positive electrode active material layer, and an amount of the second particle in the second positive electrode active material layers may be in a range of about 55 wt% or more with respect to 100 wt% of the second positive electrode active material layer.

Formula 1: $Li_{a1}Mn_{z1}Fe_{x1}Bl_{y1}PO_{4-b1}$

wherein $0.8 \leq a1 \leq 1.2$, $0 \leq z1 \leq 0.2$, $0.8 \leq x1 \leq 1$, $0 \leq y1 \leq 0.05$, $0 \leq b1 \leq 0.05$ and $x1+y1+z1=1$, B1 may be or include at least one of Ti, Mg, V, Al, and a combination thereof.

Formula 2: $Li_{a2}Ni_{x2}Co_{y2}Ma_{z2}B2_{w2}O_{2-b2}$

wherein $0.8 \leq a2 \leq 1.2$, $0.8 \leq x2 < 1$, $0 < y2 \leq 0.2$, $0 < z2 \leq 0.2$ $0 \leq w2 \leq 0.1$, $0 \leq b2 \leq 0.05$, and $0.9 \leq x2+y2+z2+w2 \leq 1.1$, Ma may be or include at least one of Al, Mn, and a combination thereof, B2 may be or include at least one of Mg, Ti, V, Zr, Mo, Nb, and a combination of thereof.

According to an example embodiment of the present disclosure, a rechargeable lithium battery may include a positive electrode, a negative electrode, and an electrolyte in which the positive electrode and the negative electrode are impregnated. The positive electrode may include a positive current collector, a first positive active material layer on the positive current collector, and a second positive active material layer on the first positive active material layers. Each of, or at least one of the first and second positive active material layers may contain a first particle and a second particle. The first particle may include a compound defined by Formula 1, the second particle may include a compound defined by Formula 2. A weight ratio of the first particle to the second particle in the first positive electrode active material layer may be in a range of about 6:4 to about 9:1, and a weight ratio of the first particle to the second particle in the second positive electrode active material layer may be in a range of about 1:9 to about 4:6.

According to an example embodiment of the present disclosure, a method for manufacturing a positive electrode

for a rechargeable lithium battery may include preparing a positive electrode current collector, coating a first positive electrode slurry on the positive electrode current collector, and coating a second positive electrode slurry on the first positive electrode slurry. Each of, or at least one of the first and second positive electrode slurries may contain a first particle and a second particle, wherein the first particle may include a compound defined by Formula 1, and wherein the second particle may include a compound defined by Formula 2. In the first positive electrode slurry, an amount of the first particle may be in a range of about 55 wt% or more based on the total amount of solid content, and in the second positive electrode slurry, an amount of the second particle may be in a range of about 55 wt% or more based on the total amount of solid content.

BRIEF DESCRIPTION OF DRAWINGS

FIG. 1 illustrates a schematic conceptual diagram of a rechargeable lithium battery according to example embodiments of the present disclosure.
FIGS. 2 to 5 illustrate schematic cross-sectional views of a rechargeable lithium battery according to an example embodiment, FIG. 2 showing a cylindrical battery, FIG. 3 showing a prismatic battery, and FIGS. 4 and 5 showing pouch-type batteries.
FIG. 6 is a cross-sectional view illustrating a positive electrode for a rechargeable lithium battery according to example embodiments of the present disclosure.
FIG. 7 is an enlarged view of a first positive electrode active material layer of a positive electrode for a rechargeable lithium battery according to example embodiments of the present disclosure.
FIG. 8 is an enlarged view of a second positive electrode active material layer of a positive electrode for a rechargeable lithium battery according to example embodiments of the present disclosure.
FIG. 9 is a flowchart illustrating a method of manufacturing a positive electrode for a rechargeable lithium battery, according to an example embodiment.

DETAILED DESCRIPTION OF EMBODIMENTS

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.
In this description, when an element is described as being "on" another element, the element may be "directly on" the other element, or one or more intervening elements may be present therebetween. In the drawings, certain thicknesses may be exaggerated to better illustrate technical details. Throughout the specification, like reference numerals indicate like elements.
Unless explicitly stated otherwise, singular forms may also include plural forms. Furthermore, unless otherwise especially noted, the phrase "A or B" may indicate "comprising A, or comprising B, or comprising A and B." The terms "comprises/includes" and "comprising/including" do not exclude the presence or addition of one or more other components.
In this description, the phrase "combination thereof" may refer to a mixture, a stack, a composite, a copolymer, an alloy, a blend, or a reaction product.
The phrases "A or B," "at least one of A and B," "at least one of A or B," "A, B, or C," "at least one of A, B, and C," and "at least one of A, B, or C" include any one or all possible combinations of the listed elements.
Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.
When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

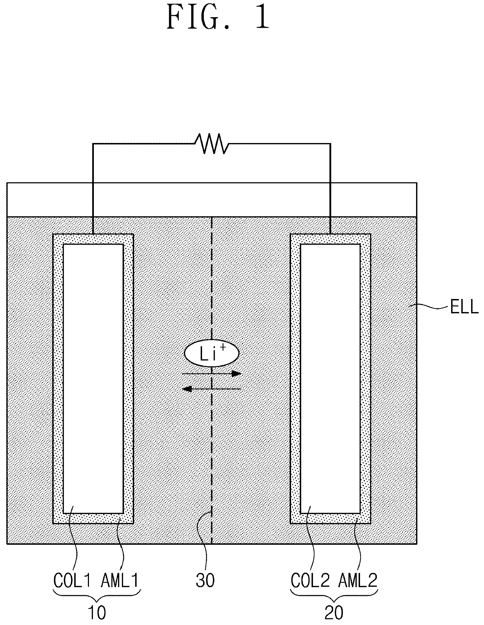

FIG. 1 is a schematic conceptual diagram of a rechargeable lithium battery according to example embodiments of

the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

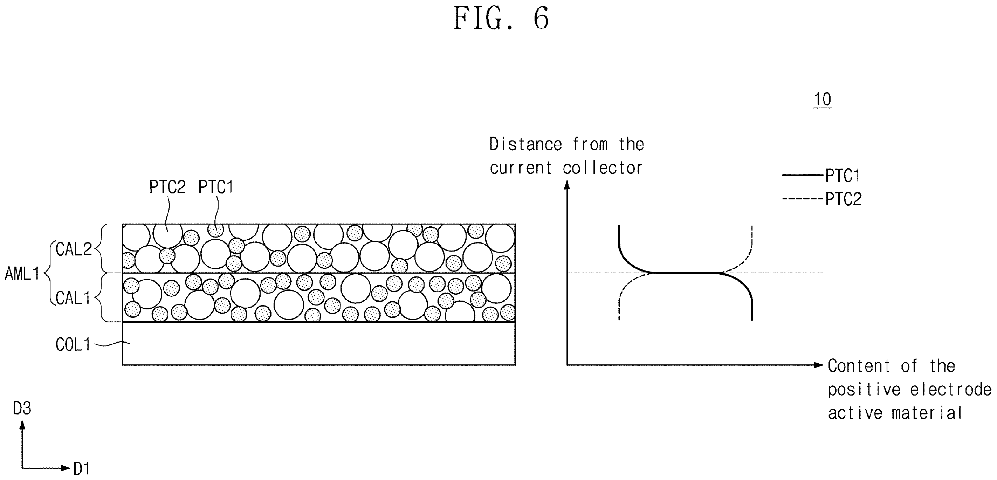

The positive electrode 10 for a rechargeable lithium battery may include a current collector COL1, and a positive electrode active material layer AML1 on the current collector. The positive electrode active material layer AML1 may include a positive electrode active material, and may further include a binder and/or a conductive material (e.g., an electrically conductive material). A detailed description of the positive electrode active material layer AML1 according to the example embodiments of the present disclosure is described below with reference to FIGS. 6 to 8. Al may be used as the current collector COL1, but the current collector COL1is not limited thereto.

## Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include ≥ 90 wt% to ≤ 99 wt% of the negative electrode active material, ≥ 0.5 wt% to ≤ 5 wt% of the binder, and ≥ 0 wt% to ≤ 5 wt% of the conductive material.

The binder may be configured to attach the negative electrode active material particles to each other, and also to attach the negative electrode active material to the current collector COL2. The binder may include a non-aqueous binder, an aqueous binder, a dry binder, and a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, and a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoridehexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

## Negative Electrode Active Material

The negative electrode active material in the negative electrode active material layer AML2 may include at least

one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal or semimetal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x \leq 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

## Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces, of the porous substrate.

The porous substrate may be or include a polymer film formed of or including any one or more of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON®), or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

## Electrolyte Solution ELL

The electrolyte solution ELL for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

## Rechargeable Lithium Battery

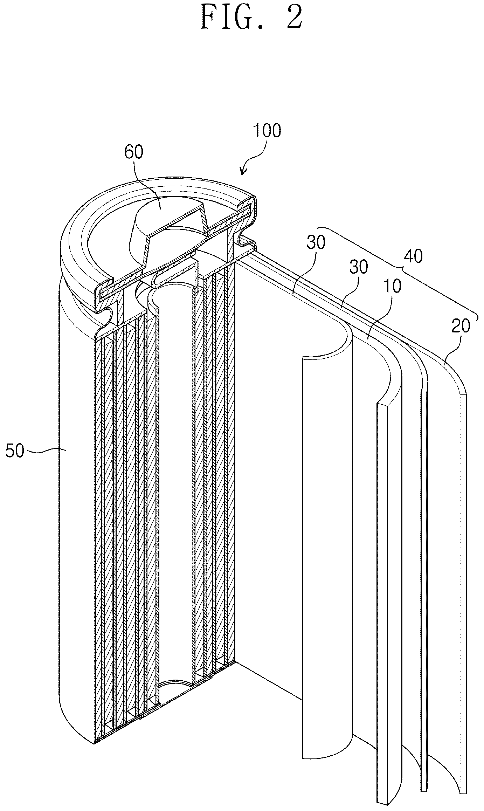

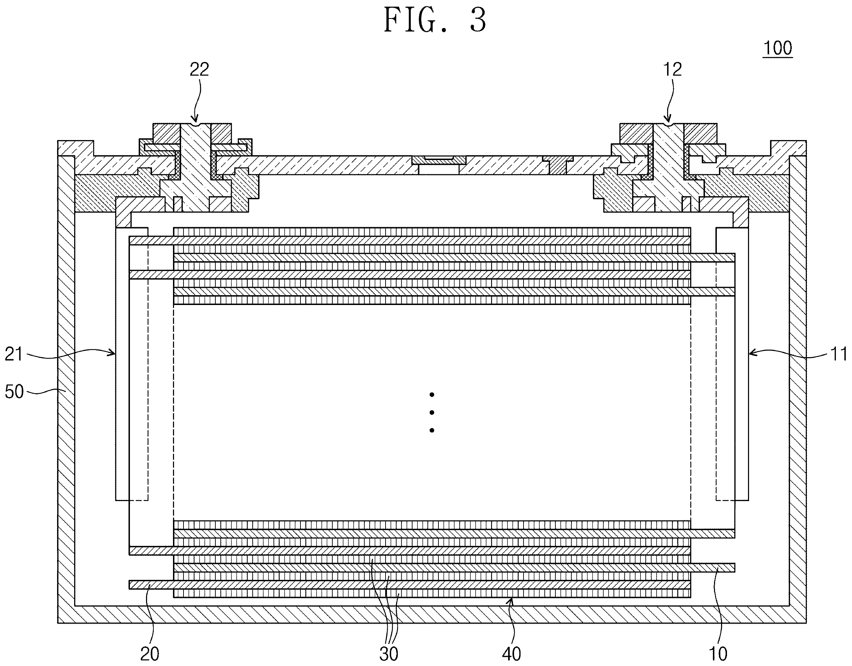

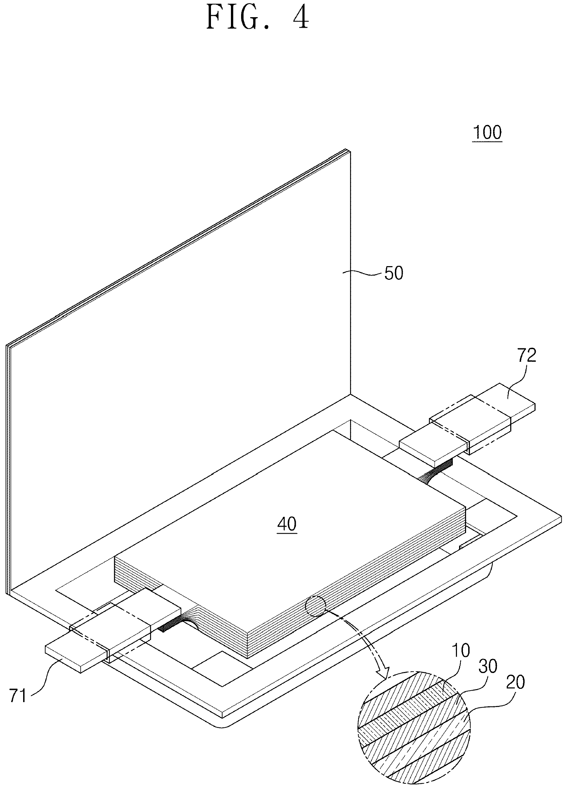

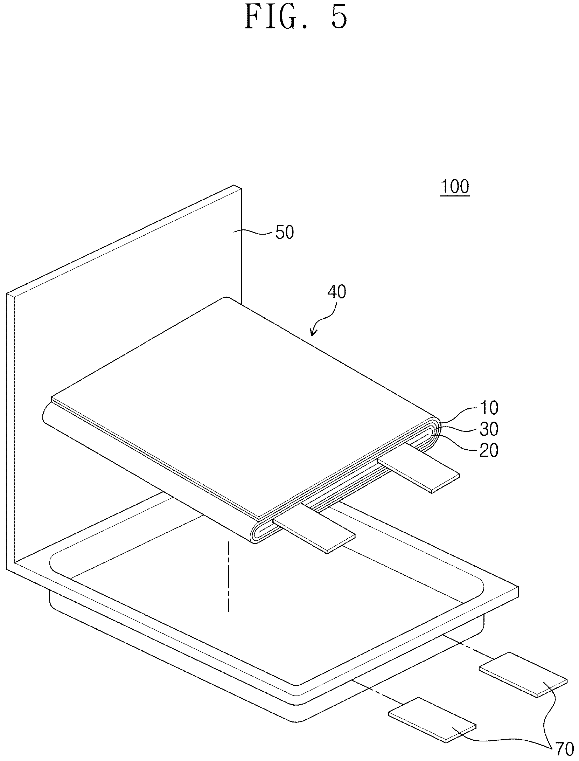

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

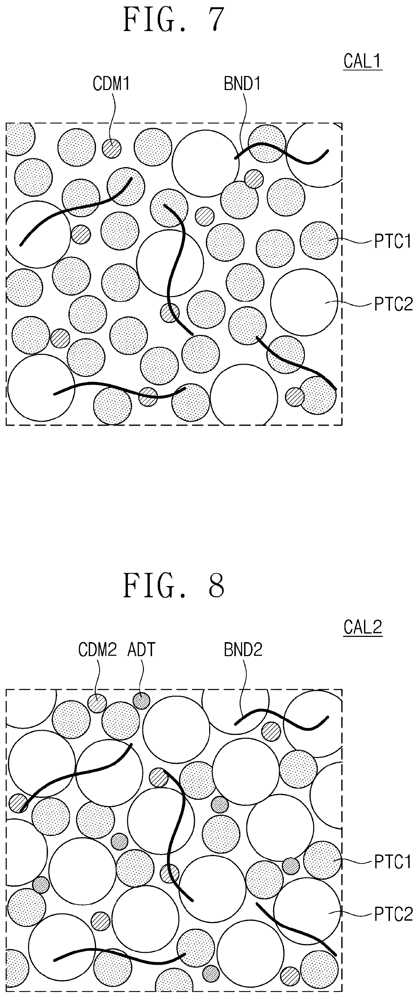

FIG. 6 is a cross-sectional view of a positive electrode 10 for a rechargeable lithium battery according to example embodiments of the present disclosure. FIG. 7 is an enlarged view of a first positive electrode active material layer CAL1 of a positive electrode 10 for a rechargeable lithium battery according to example embodiments of the present disclosure and illustrated in FIG. 6. FIG. 8 is an enlarged view of the second positive electrode active material layer CAL2 of the positive electrode 10 for a rechargeable lithium battery according to example embodiments of the present disclosure and illustrated in FIG. 6.

A positive electrode 10, and a lithium secondary battery 100 including the positive electrode 10 according to example embodiments of the present disclosure is described in more detail below with reference to FIGS. 6 to 8.

### Positive electrode 10

Referring to FIGS. 1 and 6, the positive electrode 10 for a rechargeable lithium battery may include the positive electrode current collector COL1 and the positive electrode active material layer AML1 as described above. The positive electrode active material layer AML1 may include a first positive electrode active material layer CAL1 and a second positive electrode active material layer CAL2 stacked on the first positive electrode active material layer CAL1. Each of, or at least one of, the first and second positive electrode active material layers CAL1 and CAL2 may include a first particle PTC1 and a second particle PTC2.

First Particle PTC1

The first particle PTC1 may include an olivine-based lithium compound represented by Formula 1 below.

Formula 1: $Li_{a1}Mn_{z1}Fe_{x1}B1_{y1}PO_{4-b1}$

In Formula 1, 0.8≤a1≤1.2, 0≤z1≤0.2, 0.8≤x1≤1, 0≤y1≤0.05, 0≤b1≤0.05 and x1+y1+z1=1. In Formula 1, B1 may be or include at least one of Ti, Mg, V, Al, or a combination thereof. B1 may be or include a dopant doped into the first particle PTC1. For example, B1 may include Ti.

In an example embodiment, the first particle PTC1 may include a first coating layer on a surface thereof. The first coating layer may cover substantially the entire surface of the first particle PTC1, or may cover a part of the surface of the first particles PTC1. For example, the first coating layer may include carbon and/or a carbon-containing compound. The structural stability and the electrical conductivity of the first particle PTC1 may be improved by the first coating layer.

The first coating layer may further include a metal-containing compound such as at least one of a titanium-containing compound, a magnesium-containing compound, and a vanadium-containing compound. The metal-containing compound such as or including at least one of a titanium-containing compound, a magnesium-containing compound, and a vanadium-containing compound may be or include, for example, at least one of a metal oxide, a metal hydroxide, a metal carbonate, a composite thereof, or a mixture thereof. The metal-containing compound may further include other metals or non-metal elements. For example, the metal-containing compound may further include lithium.

The form of the first particle PTC1 is not particularly limited. For example, the first particle PTC1 may have a spherical secondary particle form in which a plurality of primary particles are aggregated. For example, the first particle PTC1 may be in the form of a single particle including at least one primary particle. Alternatively, the first particle PTC1 may be present in the form of a mixture of a compound in the secondary particle form and a compound in the single particle form.

In this specification, the single particle may refer to one particle that exists alone without a grain boundary, or a particle boundary, therein. With respect to morphology, the single particle may refer to one particle, a monolith structure, a single unitary structure, and/or a non-aggregated particle, existing as an independent phase in which particles do not aggregate with each other. For example, the single particle may be a single crystal. Alternatively, the single particle may be a particle containing a few crystals. The single particle may be independently separated. Alternatively, the single particle may be in a form of having ≥ 2 to ≤ 10 single particles bonded or coupled to each other.

When the first particle PTC1 has a single particle form, the average particle diameter (D50) of the first particle PTC1 may be in a range of ≥ 500 nm to ≤ 2.5 μm, or about 1 μm. When the first particle PTC1 have a spherical secondary particle form, the average particle diameter of the first particle PTC1 may be in a range of ≥ 2 μm to ≤ 15 μm, ≥ 3 μm to ≤ 10 μm, or ≥ 3 μm to ≤ 7 μm. For example, the average particle diameter of the first particle PTC1 may be about 5 μm. In an example embodiment, the average particle diameter may be measured using a particle size analyzer. The average particle diameter may refer to the diameter (D50) of particles at a cumulative volume of 50 vol% in a particle size distribution.

The positive electrode 10 according to the example embodiments of the present disclosure may include the first particle PTC1, which is an olivine-based lithium compound having a stable crystal structure, to have desired or improved stability and desired or improved lifetime characteristics.

**Second Particle PTC2**

The second particle PTC2 may include a high-nickel lithium compound represented by Formula 2 below.

Formula 2: $Li_{a2}Ni_{x2}Co_{y2}Ma_{z2}B2_{w2}O_{2-82}$

In Formula 2, 0.8≤a2≤1.2, 0.8≤x2<1, 0<y2≤0.2, 0<z2≤0.2 0≤w2≤0.1, 0≤b2≤0.05, and 0.9≤x2+y2+z2+w2≤1.1. In Formula 2, Ma may be or include at least one of Al, Mn, or a combination thereof, and B2 may be or include at least one of Mg, Ti, V, Zr, Mo, Nb, or a combination thereof. B2 may be or include a dopant doped into the second particle PTC2. In Formula 2, when w2 is equal to 0, Formula 2 may refer to a lithium nickel-based composite oxide that is not doped with B2.

In an example embodiment, the second particle PTC2 may include a second coating layer on its surface. By including the second coating layer, the second particle PTC2 may effectively reduce or prevent structural collapse due to repeated charging and discharging. Thus, the life characteristics of the rechargeable lithium battery may be improved.

The second coating layer may include a boron-containing compound, an aluminum-containing compound, or a combination thereof. The metal-containing compound in the second coating layer may be or include, for example, at least one of a metal oxide, a metal hydroxide, a metal carbonate, a composite thereof, or a mixture thereof. The metal-containing compound may further contain other metals or non-metal elements. For example, the second coating layer may further contain at least one of lithium, manganese, and/or nickel and the like.

A method for measuring the metal content in the second coating layer of the second particle PTC2 may include

performing scanning electron microscopeenergy dispersive X-ray spectroscopy (SEM-EDS) on the second particle PTC2. This analysis may determine the content of boron and/or aluminium in the second coating layer. As the method for measuring the metal content in the second coating layer, in addition to SEM-EDS, inductively coupled plasma-mass spectrometry (ICP-MS), inductively coupled plasma optical emission spectroscopy (ICP-OES), or the like may be used.

The form of the second particle PTC2 may not be particularly limited. For example, the second particle PTC2 may be in the form of a secondary particle in which a plurality of primary particles are aggregated. For example, the second particle PTC2 may be in the form of a single particle including at least one primary particle. Alternatively, the second particle PTC2 may be present in the form of a mixture of a compound in the secondary particle form and a compound in the single particle form. The description of the single particle may be the same as or similar to the description above for the first particle PTC1.

When the second particle PTC2 has a single particle form, the average particle diameter of the second particle PTC2 may be in a range of ≥ 3 μm to ≤ 10 μm, or ≥ 5 μm to ≤ 8 μm. When the second particle PTC2 has a secondary particle form, the average particle diameter of the second particle PTC2 may be in a range of ≥ 8 μm to ≤ 20 μm, ≥ 10 μm to ≤ 20 m, or ≥ 12 μm to ≤ 18 μm. In an example embodiment, the average particle diameter may be measured using a particle size analyzer. The average particle diameter may refer to the diameter (D50) of particles at a cumulative volume of 50vol% in a particle size distribution.

The average particle diameter of the second particle PTC2 may be larger than the average particle diameter of the first particle PTC1. The average particle diameter of the second particle PTC2 may be at least about twice as large as the average particle diameter of the first particle PTC1. In particular, when the first particle PTC1 has a single particle form, the average particle diameter of the second particle PTC2 may be about 5 times or more larger than the average particle diameter of the first particle PTC1.

The positive electrode 10 according to examples the present disclosure may include the second particle PTC2 that is a high-nickel-based positive electrode active material, whereby high operating voltage, high capacity, and high energy density may be achieved.

<u>**First Positive Electrode Active Material Layer CAL1**</u>

Referring to FIGS. 6 and 7, the first positive electrode active material layer CAL1 may include the first particle PTC1 as a main positive electrode active material. An amount of the first particle PTC1 in the first positive electrode active material layer CAL1 may be at least ≥ 55 wt% with respect to 100 wt% of the first positive electrode active material layer CAL1. For example, the amount of the first particle PTC1 in the first positive electrode active material layer CAL1 may be in a range of ≥ 55 wt% to ≤ 99 wt%.

Since the first particle PTC1, which is or includes an olivine-based positive electrode active material, is thermally stable, the risk of chemical decomposition or thermal runaway may be low even in areas adjacent to the current collector, and the risk of detachment from the current collector may be low due to a small volume change during the charging and discharging process. The positive electrode 10 according to the example embodiments of the present disclosure may include the first positive electrode active material layer CAL1 adjacent to the positive electrode current collector COL1, with the first particle PTC1 as the main active material, thereby improving the lifetime and high-temperature stability of the entire positive electrode.

The first positive electrode active material layer CAL1 may further include second particle PTC2 as the positive electrode active material. When the first positive electrode active material layer CAL1 contains a given amount of the second particle PTC2 that is a high-nickel-based positive electrode active material, the positive electrode may have desired or improved capacity along with desired or improved lifetime characteristics.

According to example embodiments of the present disclosure, the weight ratio of the first particle PTC1 to the second particle PTC2 in the first positive electrode active material layer CAL1 may be in a range of about 6:4 to about 9:1. For example, the weight ratio of the first particle PTC1 to the second particle PTC2 in the first positive electrode active material layer CAL1 may be about 7:3.

As illustrated in FIG. 7, the first positive electrode active material layer CAL1 may further include a first binder BND1 and a first conductive material CDM1. Although not illustrated, the first positive electrode active material layer CAL1 may further include an additive that can constitute a sacrificial positive electrode.

The first binder BND1 may bind the first particle PTC1, the second particle PTC2, and the first conductive material CDM1 to each other. In addition, the first binder BND1 may securely fix the first positive electrode active material layer CAL1 to the current collector COL1. As an example, the first binder BND1 may include at least one of polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, (meth)acrylic resin, a polyester resin, and nylon, but is not limited thereto.

The first conductive material CDM1 may be used to improve conductivity of the first positive electrode active

material layer CAL1. Any conductive material that does not cause chemical change in the first positive electrode active material layer CAL1 may be used as the first conductive material CDM1 without limitation. For example, the first conductive material CDM1 may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

An amount of the first binder BND1 in the first positive electrode active material layer CAL1 may be in a range of ≥ 0.5 wt% to ≤ 5 wt% with respect to 100 wt % of the first positive electrode active material layer CAL1. An amount of the first conductive material CDM1 in the first positive electrode active material layer CAL1 may be in a range of ≥ 0.5 wt % to ≤ 5 wt % with respect to 100 wt % of the first positive electrode active material layer CAL1.

## Second Positive Electrode Active Material Layer CAL2

Referring to FIGS. 6 and 8, the second positive electrode active material layer CAL2 may include the second particle PTC2 as a main positive electrode active material. An amount of the second particle PTC2 in the second positive electrode active material layer CAL2 may be at least about 55 wt% with respect to 100 wt% of the second positive electrode active material layer CAL2. For example, the amount of the second particle PTC2 in the second positive electrode active material layer CAL2 may be in a range of ≥ 55 wt% to ≤ 99 wt%.

The second particle (PTC2), which is or includes a high-nickel-based positive electrode active material, has desired or improved capacity and desired or improved intercalation and deintercalation rates of lithium ions in the charging and discharging process. The positive electrode 10 according to the example embodiments of the present disclosure may improve the fast-charging characteristics of the battery by including a large amount of the second particle PTC2, a high-nickel-based positive electrode active material, in the second positive electrode active material layer CAL2, in which electrochemical reactions actively occur.

The second positive electrode active material layer CAL2 may further include the first particle PTC1 as the positive electrode active material. When the second positive electrode active material layer CAL2 contains a given amount of the first particle PTC1 that is an olivine-based positive electrode active material, the positive electrode may have desired or improved stability while having desired or improved capacity and desired or improved fast-charging characteristics.

According to example embodiments of the present disclosure, the weight ratio of the first particle PTC1 to the second particle PTC2 in the second positive electrode active material layer CAL2 may be in a range of about 1:9 to about 4:6. For example, the weight ratio of the first particle PTC1 and the second particle PTC2 in the second positive electrode active material layer CAL2 may be about 3:7.

Referring back to FIG. 8, the second positive electrode active material layer CAL2 may further include a borate-based additive ADT. For example, the borate-based additive ADT may include at least one of lithium difluoro (oxalato) borate (LiDFOB), lithium bis(oxalato)borate (LiBOB), lithium tetrafluoroborate ($LiBF_4$), or any combination thereof. When the second positive electrode active material layer CAL2 includes the borate-based additive ADT, the stability of the positive electrode 10 may be improved.

As described above, the second positive electrode active material layer CAL2 may include a high-nickel-based positive electrode active material as the main active material, which operates at high voltages, whereby oxidation reactions at the interface between the electrolyte and the positive electrode may be promoted. The borate-based additive ADT may form a stable interface layer on the surface of the positive electrode 10 to reduce or suppress decomposition of the electrolyte and improve interface stability. In addition, the high-nickel-based positive electrode active material may release oxygen during the charging and discharging process and cause an oxidation reaction with the electrolyte. The borate-based additive ADT may react with radicals generated due to release of oxygen, or reduce or block the interaction between oxygen and the electrolyte on the surface of the high-nickel-based positive electrode active material to reduce or suppress side reactions.

In other words, the borate-based additive ADT may improve the stability of the positive electrode, particularly the high-temperature stability, by improving the interfacial stability and reduce or suppressing side reactions.

An amount of the borate-based additive ADT in the second positive electrode active material layer CAL2 may be in a range of ≥ 0.1 wt% to ≤ 2.0 wt%, or ≥ 0.5wt % to ≤ 1.0wt % with respect to 100 wt% of the second positive electrode active material layer CAL 2. When the amount of the borate-based additive (ADT) satisfies the above-described range, the stability of the positive electrode may be improved without reducing the electrical conductivity and the ionic conductivity of the positive electrode.

Alternatively, the first positive electrode active material layer CAL1 may not include the borate-based additive. The borate-based additive may be configured to stabilize the interface and reduce side reactions, but has relatively low conductivity. The first positive electrode active material layer CAL1 containing a large amount of the olivine-based positive electrode active material with desired or improved stability may reduce or prevent a decrease in conductivity and a decrease in capacity of the positive electrode by excluding the borate-based additive.

The second positive electrode active material layer CAL2 may further include a second binder BND2 and a second conductive material CDM2. Although not illustrated, the second positive electrode active material layer CAL2 may further include an additive that can constitute a sacrificial positive electrode.

The second binder BND2 may bind the first particle PTC1, the second particle PTC2, and the second conductive material CDM2 to each other. In addition, the second binder BND2 may securely fix the second positive electrode active material layer CAL2 on the first positive electrode active material layer CAL1. As an example, the second binder BND2 may include at least one of polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, (meth)acrylic resin, a polyester resin, and nylon, but is not limited thereto.

The second conductive material CDM2 may improve the conductivity of the second positive electrode active material layer CAL2. Any conductive material that does not cause chemical change in the second positive electrode active material layer CAL2 may be used as the second conductive material CDM2 without limitation. For example, the second conductive material CDM2 may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in the form of a metal powder or a metal fiber; a conductive polymer such as a polyphenylene derivative; or a mixture thereof.

An amount of the second binder BND2 in the second positive electrode active material layer CAL2 may be in a range of ≥ 0.5 wt% to ≤ 5 wt% with respect to 100 wt% of the second positive electrode active material layer CAL2. An amount of the second conductive material CDM2 in the second positive electrode active material layer CAL2 may be in a range of ≥ 0.5 wt% to ≤ 5 wt% with respect to 100 wt% of the second positive electrode active material layer CAL2.

According to example embodiments of the present disclosure, a thickness ratio of the first positive electrode active material layer CAL1 to the second positive electrode active material layers CAL2 may be in a range of about 1:3 to about 3:1. For example, the thickness ratio of the first positive electrode active material layer CAL1 to the second positive electrode active material layer CAL2 may be in a range of about 30:70 to about 70:30, or about 1:1.

In one example embodiment of the present disclosure, the boundary between the first positive electrode active material layer CAL1 and the second positive electrode active material layer CAL2 may be defined through the density distribution of the second particles PTC2 (see FIG. 6). For example, a cross section of the positive electrode active material layer AML1 of the rechargeable lithium battery may be analyzed through images of, e.g., an electron microscope such as SEM, to define the part where the density of the second particle PTC2 sharply decreases as the boundary between the first positive electrode active material layer CAL1 and the second positive electrode active material layer CAL2. Based on the boundary point, a region with a higher density of the second particle PTC2 may be defined as the second positive electrode active material layer CAL2, and a region with a lower density of the second particle PTC2 may be defined as the first positive electrode active material layer CAL1. The average particle diameter of the second particle PTC2 may be at least about twice as large as the average particle diameter of the first particle PTC1, and therefore, the second particle PTC2 may be clearly identified from the first particle PTC1.

## Method for Manufacturing Positive Electrode 10

The method for manufacturing a positive electrode 10 according to the example embodiments of the present disclosure may include preparing a positive electrode current collector, coating a first positive electrode slurry on the positive electrode current collector, and coating a second positive electrode slurry on the first positive electrode slurry.

As the positive electrode current collector, Al may be prepared, but the positive electrode current collector is not limited thereto.

The first positive electrode slurry may include at least one of a solvent, a first particle, and a second particle.

The solvent may be or include a solvent commonly used in the art, and may include, for example, at least one of dimethyl sulfoxide (DMSO), isopropyl alcohol, N-methylpyrrolidone (NMP), acetone, water, or a combination thereof.

The content of the first and second particles may be the same as described above with reference to FIG. 6. For example, the first particle may include an olivine-based positive electrode active material, and the second particle may include a high-nickel-based positive electrode active material.

The first positive electrode slurry may further include a first binder and a first conductive material. For example, the first binder may include a non-aqueous binder, an aqueous binder, or a combination thereof, and the first conductive material may include a carbon-based material.

An amount of the first particle in the first positive electrode slurry may be at least about 55 wt% relative to 100 wt% of the solid content. For example, the amount of the first particle may be in a range of ≥ 55 wt% to ≤ 99 wt%. The weight ratio of the first particle and the second particle in the first positive electrode slurry may be in a range of about 6:4 to about 9:1. For example, the weight ratio of the first particle and the second particle may be about 7:3. The solid content of the positive

electrode slurry herein may be defined to include all components except for the solvent.

The first positive electrode slurry may be coated on the positive electrode current collector through a coating apparatus to form a first positive electrode active material layer. For example, the first positive electrode slurry may be coated using methods such as, e.g., doctor blade, spray coating, bar coating, slot die coating, or the like.

The second positive electrode slurry may include a solvent, a first particle, and a second particle.

The solvent may include, for example, at least one of dimethyl sulfoxide (DMSO), isopropyl alcohol, N-methylpyrrolidone (NMP), acetone, water, or a combination thereof.

The content of the first and second particles may be the same as described above with reference to FIG. 6. For example, the first particle may include an olivine-based positive electrode active material, and the second particle may include a high-nickel-based positive electrode active material.

The second positive electrode slurry may further include a second binder and a second conductive material. For example, the second binder may include a non-aqueous binder, an aqueous binder, or a combination thereof, and the second conductive material may include a carbon-based material.

An amount of the second particle in the second positive electrode slurry may be at least ≥ 55 wt% relative to 100 wt% of the solid content. For example, the amount of the second particle may be in a range of ≥ 55 wt% to ≤ 99 wt%. The weight ratio of the first particle and the second particle in the second positive electrode slurry may be in a range of about 1:9 to about 4:6. For example, the weight ratio of the first particle to the second particle may be about 3:7.

The second positive electrode slurry may be coated onto the first positive electrode slurry via a coating apparatus to form a second positive electrode active material layer. For example, the second positive electrode slurry may be coated using a method such as, e.g., doctor blade, spray coating, bar coating, slot die coating, or the like.

The positive electrode current collector, the first positive electrode active material layer, and the second positive electrode active material layer, stacked, e.g., sequentially stacked, may be pressed to manufacture the final positive electrode.

## Rechargeable Lithium Battery 100

The rechargeable lithium battery according to the example embodiments of the present disclosure may include the positive electrode 10, the negative electrode 20, and the electrolytic solution ELL described above.

As described above with reference to FIG. 1, the negative electrode 20 may include a current collector COL2, and a negative electrode active material layer AML2 positioned on the current collector COL2. The negative electrode active material layer AML2 may include a negative electrode active material, and may further include a binder and/or a conductive material.

The negative electrode current collector COL2 may be or include at least one of a copper foil, a nickel foil, a stainless-steel foil, a titanium foil, a nickel foam, a copper foam, a polymer substrate coated with a conductive metal, or combinations thereof, but is not limited thereto.

The negative electrode active material may include at least one of a material capable of reversibly intercalating/de-intercalating lithium ions, a material capable of doping/dedoping lithium, or a combination thereof.

The material capable of reversibly intercalating/deintercalating lithium ions may include a carbon-based negative electrode active material, such as crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The material capable of doping/dedoping lithium may be or include a Si-based negative electrode active material. The Si-based negative electrode active material may include at least one of silicon, a silicon-carbon composite, SiOx ($0 < x \leq 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof), or any combination thereof.

As described above with reference to FIG. 1, the electrolytic solution ELL may include a non-aqueous organic solvent and a lithium salt.

For example, the non-aqueous organic solvent may be or include at least one of a carbonate-based, ester-based, ether-based, ketone-based, alcohol-based solvent, an aprotic solvent, or a combination thereof.

The lithium salt dissolved in the organic solvent is configured to supply lithium ions in a battery, to enable operation of a rechargeable lithium battery, and to improve transportation of the lithium ions between positive and negative electrodes. Examples of the lithium salt include at least one of $LiPF_6$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, or lithium tetrafluoroethanesulfonate,) or any combination thereof.

The electrolyte solution ELL may further include a borate-based additive. The borate-based additive may

include, for example, at least one of lithium difluoro(oxalato)borate (LiDFOB), lithium bis(oxalato)borate (LiBOB), lithium tetrafluoroborate ($LiBF_4$), or any combination thereof.

The borate-based additive may form a stable interface layer on the surface of the positive electrode to reduce or suppress decomposition of the electrolyte and improve interface stability. In addition, the borate-based additive may react with radicals generated due to oxygen released from the positive electrode, or may reduce or block the interaction between oxygen and the electrolyte on the surface of the high-nickel-based positive electrode active material to reduce or suppress side reactions.

An amount of the borate-based additive in the electrolyte solution ELL may be in a range of ≥ 0.1 wt% to ≤ 2.0 wt% with respect to 100 wt% of the electrolyte solution ELL.

The rechargeable lithium battery according to the example embodiments of the present disclosure, in which the positive electrode active material layer is composed of or include a double layer and the composition of each layer is different, may achieve desired or improved capacity, desired or improved stability, and desired or improved lifetime characteristics. The rechargeable lithium battery according to the example embodiments of the present disclosure may further improve the stability of the battery by including the borate-based additive in the second positive electrode active material layer and/or the electrolyte.

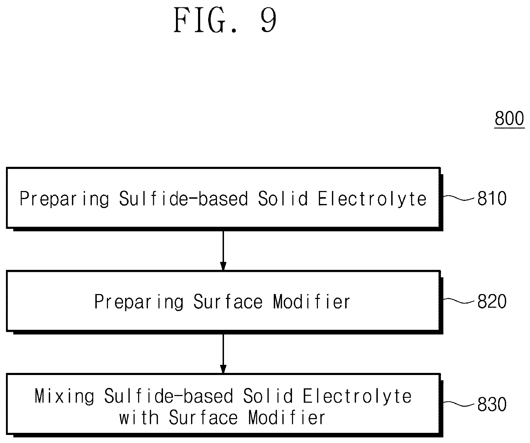

FIG. 9 is a flowchart illustrating a method of manufacturing a positive electrode for a rechargeable lithium battery, according to an example embodiment. In FIG. 9, the method 900 includes operation 910, which includes preparing a positive electrode current collector. Operation 920 includes coating a first positive electrode slurry on the positive electrode current collector. Operation 930 includes coating a second positive electrode slurry on the first positive electrode slurry. For example, at least one of the first and second positive electrode slurries includes a first particle and a second particle. In an example, the first particle includes a compound defined by Formula 1 below, and the second particle includes a compound defined by Formula 2 below. In other examples, in the first positive electrode slurry, an amount of the first particle is in a range of about 55 wt% or more based on the total amount of solid content, and in the second positive electrode slurry, an amount of the second particle is in a range of about 55 wt% or more based on the total amount of solid content.

Formula 1: $Li_{a1}Mn_{z1}Fe_{x1}B1_{y1}PO_{4-b1}$.

In Formula 1, $0.8 \leq a1 \leq 1.2$, $0 \leq z1 \leq 0.2$, $0.8 \leq x1 \leq 1$, $0 \leq y1 \leq 0.05$, $0 \leq b1 \leq 0.05$ and $x1+y1+z1=1$, and B1 is or includes at least one of Ti, Mg, V, Al, and a combination thereof.

Formula 2: $Li_{a2}Ni_{x2}Co_{y2}Ma_{z2}B2_{w2}O_{2-b2}$.

In Formula 2, $0.8 \leq a2 \leq 1.2$, $0.8 \leq x2 < 1$, $0 < y2 \leq 0.2$, $0 < z2 \leq 0.2$ $0 \leq w2 \leq 0.1$, $0 \leq b2 \leq 0.05$, and $0.9 \leq x2+y2+z2+w2 \leq 1.1$, Ma is or includes at least one of Al, Mn, and a combination thereof, and B2 is or includes at least one of Mg, Ti, V, Zr, Mo, Nb, and combinations thereof.

In other examples, a weight ratio of the first particle to the second particle in the first positive electrode slurry is in a range of about 6:4 to about 9:1, and a weight ratio of the first particle to the second particle in the second positive electrode slurry is in a range of about 1:9 to about 4:6. In a further example, the first positive electrode slurry further includes at least one of a first solvent, a first binder, and a first conductive material. In yet another example, the second positive electrode slurry further includes at least one of a second solvent, a second binder, a second conductive material, and a borate-based additive.

Hereinafter, the present disclosure is described in more detail with reference to examples. However, the following examples are merely presented to exemplify the present disclosure, and the scope of the present disclosure is not limited thereto.

**Preparation Example 1: Preparation of First Particle**

An iron phosphate precursor of $Fe_1PO_4$, lithium carbonate, and titanium dioxide were mixed at a molar ratio of about 1:1.03:0.03. 10 wt% of glucose was further added to the mixture. The mixture was subjected to a wet grinding process using ball milling. The mixture was dried over evaporation on a tray by heating, and then dried in a vacuum oven at about 120°C for about 4 hours. The dried mixture was calcined at about 750°C for about 10 hours under nitrogen atmosphere. The calcined product was ground to obtain the first particle.

**Preparation Example 2: Preparation of Second Particle**

A co-precipitation method was used to prepare a high nickel-based precursor. Specifically, as raw materials for nickel-based metal hydroxide, nickel sulfate ($NiSO_4 \cdot 6H_2O$), cobalt sulfate ($CoSO_4 \cdot 7H_2O$), and aluminum sulfate ($Al_2(SO_4)_3 \cdot 18H_2O$)were stirred in distilled water as a solvent at a molar ratio of Ni:Co:Al of about 88.5:10:1.5 for about 30 hours

to prepare a metal raw material mixture. The metal raw material mixture, aqueous ammonia, and sodium hydroxide were added into a reactor and subjected to reactions. The slurry solution in the reactor was filtered and washed with high purity distilled water. The washed material was dried in a hot air oven at about 210°C for about 24 hours to obtain a high nickel-based precursor ($Ni_{0.885}Co_{0.11}Al_{0.015}(OH)_2$) powder.

The high nickel-based precursor and anhydrous lithium hydroxide (LiOH) were dry mixed using a Henschel mixer. Lithium and transition metal were mixed in a molar ratio of about 1:1. The transition metal is the sum of the transition metals contained in the high nickel-based precursor (Ni+Co+Al). The mixture was further charged with a melting agent and subjected to heat treatment (i.e., a calcination process) in an oxygen atmosphere at about 750°C for about 15 hours to synthesize the second particle that were high-nickel-based positive electrode active materials. The second particle were ground using a jet mill at a pressure of about 3 bar.

The second particle was put into distilled water and washed. Boron oxide and aluminium oxide corresponding to about 3 mol% with respect to the total transition metals in the second particle were added to perform boron and aluminum coating. The second particle was dried at about 150°C for about 12 hours and subjected to a heat treatment (i.e., surface treatment) in an oxygen atmosphere at about 700°C for about 15 hours.

## Example 1

The first particle of Preparation Example 1 and the second particle of Preparation Example 2 were mixed at a weight ratio of about 7:3 to prepare a first positive electrode active material.

The prepared first positive electrode active material, the first binder (polyvinylidene fluoride), and the first conductive material (carbon black) were dispersed in N-methylpyrrolidone at a weight ratio of about 96:2:2 to prepare a first active material slurry.

The first particle of Preparation Example 1 and the second particle of Preparation Example 2 were mixed at a weight ratio of about 3:7 to prepare a second positive electrode active material.

The prepared second positive electrode active material, the second binder (polyvinylidene fluoride), and the second conductive material (carbon black) were dispersed in N-methylpyrrolidone at a weight ratio of about 96:2:2 to prepare a second active material slurry.

The first active material slurry was applied onto a 15 μm thick aluminium (Al) thin film as a positive electrode current collector, and dried to form a first positive electrode active material layer. The second active material slurry was applied onto the first positive electrode active material layer with the same thickness as the first active material slurry and dried to form a second positive electrode active material layer. Subsequently, roll pressing was performed to prepare a positive electrode in which an aluminum current collector; a first positive electrode active material layer; and a second positive electrode active material layers were stacked in this order.

## Example 2

A positive electrode was prepared in the same manner as in Example 1, with a difference that a borate-based additive (lithium bis(oxalato)borate, LiBOB) was added in the preparation of the second active material slurry.

The weight ratio of the second positive electrode active material, the second binder (polyvinylidene fluoride), the second conductive material (carbon black), and the borate-based additive in the second active material slurry was about 95.9:2:2:0.1.

## Example 3

A positive electrode was prepared in the same manner as in Example 1, with a difference that the first particle and the second particle were mixed at a weight ratio of about 4:6 in the preparation of the second positive electrode active material.

## Example 4

A positive electrode was prepared in the same manner as in Example 1, with a difference that the first particle and the second particle were mixed at a weight ratio of about 2:8 in the preparation of the second positive electrode active material.

## Comparative Example 1

The first particle of Preparation Example 1 and the second particle of Preparation Example 2 were mixed at a weight ratio of about 85:15 to prepare a positive electrode active material.

The prepared positive electrode active material, binder (polyvinylidene fluoride), and conductive material (carbon black) were dispersed in N-methylpyrrolidone at a weight ratio of about 95:3:2 to prepare a positive electrode active material slurry.

The positive electrode active material slurry was applied onto a 12 μm thickness aluminium (Al) thin film as a positive electrode current collector, and dried to form a positive electrode active material layer. Subsequently, roll pressing was performed to prepare a positive electrode in which a positive electrode active material layer was formed on an aluminum current collector.

**Comparative Example 2**

A positive electrode was prepared in the same manner as in Example 1, with a difference that only the first particle was used as the second positive electrode active material.

**Comparative Example 3**

A positive electrode was prepared in the same manner as in Example 1, with a difference that only the second particle was used as the second positive electrode active material.

**Comparative Example 4**

A positive electrode was prepared in the same manner as in Example 1, with a difference that the first particle and the second particle were mixed at a weight ratio of about 5:5 in the preparation of the second positive electrode active material.

Table 1 below shows the compositions of the positive electrodes of Examples and Comparative Examples described above.

Table 1:

| Item | Components | | Form of Positive Electrode Active Material Layer |
|---|---|---|---|
| | First Positive Electrode Active Material Layer | Second Positive Electrode Active Material Layer | |
| Example 1 | First particle 70wt%<br>Second particle 30wt% | First particle 30 wt%<br>Second particle 70wt% | Double layer |
| Example 2 | First particle 70wt%<br>Second particle 30wt% | First particle 30 wt%<br>Second particle 70wt% + Including borate-based additive | Double layer |
| Example 3 | First particle 70wt%<br>Second particle 30wt% | First particle 40wt%<br>Second particle 60wt% | Double layer |
| Example 4 | First particle 70wt%<br>Second particle 30wt% | First particle 20wt%<br>Second particle 80wt% | Double layer |
| Comparative Example 1 | First particle 85wt%, | Second particle 15wt% | Single layer |
| Comparative Example 2 | First particle 70wt%<br>Second particle 30wt% | First particle 100wt% | Double layer |
| Comparative Example 3 | First particle 70wt%<br>Second particle 30wt% | Second particle 100wt% | Double layer |
| Comparative Example 4 | First particle 70wt%<br>Second particle 30wt% | First Particle 50wt%<br>Second Particle 50wt% | Double layer |

**Preparation of Rechargeable Lithium Battery**

A 2032 type coin half-cell was prepared using the prepared positive electrode and a lithium metal counter electrode as a counter electrode. A separator made of a porous polyethylene (PE) film (thickness: about 16 μm) was placed between the positive electrode and the lithium metal counter electrode, and an electrolytic solution was injected to

prepare a rechargeable lithium battery. As an electrolyte solution, an electrolytic solution obtained by mixing 1.3 M $LiPF_6$ with a mixed solvent containing ethylene carbonate (EC), ethyl methyl carbonate (EMC), and dimethyl carbonate (DMC) at a volume ratio of 3:4:3 was used.

## Evaluation Example 1: Evaluation of High-Temperature Storage Characteristics

High-temperature storage characteristics of the rechargeable lithium batteries prepared in Examples and Comparative Examples were evaluated by the following methods.

The rechargeable lithium battery was charged at a constant current of 0.1 C at 25°C until the voltage reached 4.2 V (vs. Li), and then cut-off at a current of 0.05 C while maintaining 4.2 V in constant voltage mode. Subsequently, the rechargeable lithium battery was discharged at a constant current of 0.1 C until the voltage reached 2.5 V (vs. Li) at the time of discharge (formation cycle). After the rechargeable lithium battery subjected to the formation cycle was charged to SOH 50 at 25°C at a current of 1.0 C, the resistance (DC-IR) value of the initial battery and the resistance (DC-IR) value of a battery after being left at 60°C for 60 days and 120 days were measured, respectively. The resistance increase rates were calculated and the results are shown in Table 2 below. The resistance (DC-IR) was calculated from each current difference and voltage difference when different currents were applied, and was calculated using $\Delta R=\Delta V/\Delta I$ after discharging at constant current of 1 C for 30 seconds in an initial fully charged state. The resistance increase rate was calculated according to the following Equation 1.

Equation 1: Resistance increase rate (%) = [DC-IR value of battery after n days/DC-IR value of initial battery] × 100

Table 2:

| | Resistance Increase Rate after 60 Days of Residence (%) | Resistance Increase Rate after 90 Days of Residence (%) |
|---|---|---|
| Example 1 | 154 | 172 |
| Example 2 | 131 | 154 |
| Example 3 | 120 | 161 |
| Example 4 | 152 | 180 |
| Comparative Example 1 | 445 | unmeasurable |
| Comparative Example 2 | 314 | 372 |
| Comparative Example 3 | 194 | 253 |
| Comparative Example 4 | 314 | 430 |

Referring to Table 2, the rechargeable lithium batteries according to the examples have remarkably low resistance increase rates of high-temperature storage when compared with the lithium batteries according the comparative examples, and thus have desired or improved high-temperature storage characteristics.

## Evaluation Example 2: Evaluation of Fast-Charging Characteristics

The rechargeable lithium batteries prepared in Examples and Comparative Examples were evaluated for fast-charging characteristics by the following method.

The rechargeable lithium battery was charged at a constant current of 0.1 C at 25°C until the voltage reached 4.2 V (vs. Li), and then cut-off at a current of 0.05 C while maintaining 4.2 V in constant voltage mode. Subsequently, the rechargeable lithium battery was discharged at a constant current of 0.1 C until the voltage reached 2.5 V (vs. Li) at the time of discharge (formation cycle).

The rechargeable lithium battery subjected to the formation cycle was charged at a constant current of 0.33 C at 25°C until the voltage reached 4.2 V (vs. Li), and then cut-off at a current of 0.05 C while maintaining 4.2 V in constant voltage mode. Subsequently, the rechargeable lithium battery was discharged at a constant current of 0.33 C until the voltage reached 2.5 V (vs. Li) at the time of discharge.

The rechargeable lithium battery was then charged at constant current of 1.0 C, 2.5 C, and 3.5 C at 25° C until the voltage reached 4.2 V (vs. Li), and then cut-off at a current of 0.05 C while maintaining 4.2 V in constant voltage mode. Subsequently, the rechargeable lithium battery was discharged at a constant current of 0.33 C until the voltage reached 2.5

V (vs. Li) at the time of discharge.

The fast-charging characteristics were evaluated according to the following Equation 2, and the results are shown in Table 3 below.

Equation 2: Fast-charging characteristics [%] = [charge capacity per C-rate/charge capacity at 0.33 C] × 100

Table 3:

| | Charge rate (%) | | |
|---|---|---|---|
| | 1.0C | 2.5C | 3.5C |
| Example 1 | 96 | 92.7 | 90.9 |
| Example 2 | 95.7 | 90 | 88 |
| Example 3 | 95 | 90.2 | 88 |
| Example 4 | 96.5 | 92 | 90 |
| Comparative Example 1 | 95 | 88 | 85.5 |
| Comparative Example 2 | 94 | 87.6 | 85 |
| Comparative Example 3 | 94 | 85.7 | 80 |
| Comparative Example 4 | 94.2 | 85 | 80 |

Referring to Table 3, the rechargeable lithium batteries according to the examples exhibit improved or superior fast-charging characteristics than the rechargeable lithium batteries according the comparative examples.

In the positive electrode according to the example embodiments of the present disclosure, the positive electrode active material layer is composed of or include a double layer, and the composition of the positive electrode active materials in each layer is different, so that the positive electrode may improve the high-temperature storage characteristics and the fast-charging characteristics.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

**1.** A positive electrode (10) for a rechargeable lithium battery (100), the positive electrode (10) comprising:

a positive electrode current collector (COL1);
a first positive electrode active material layer (CAL1) on the positive electrode current collector (COL1); and
a second positive electrode active material layer (CAL2) on the first positive electrode active material layer (CAL1),
wherein at least one of the first and second positive electrode active material layers (CAL2, CAL2) comprises a first particle (PTC1) and a second particle (PTC2),
wherein the first particle (PTC1) comprises a compound defined by Formula 1,
wherein the second particle (PTC2) comprises a compound defined by Formula 2,
wherein an amount of the first particle (PTC1) in the first positive electrode active material layer (CAL1) is in a range of 55 wt% or more with respect to 100 wt% of the first positive electrode active material layer,
wherein an amount of the second particle (PTC2) in the second positive electrode active material layer (CAL2) is in a range of 55 wt% or more with respect to 100 wt% of the second positive electrode active material layer,

Formula 1: $Li_{a1}Mn_{z1}Fe_{x1}Bl_{y1}PO_{4-b1}$

wherein $0.8 \le a1 \le 1.2$, $0 \le z1 \le 0.2$, $0.8 \le x1 \le 1$, $0 \le y1 \le 0.05$, $0 \le b1 \le 0.05$, and $x1+y1+z1=1$,
B1 comprises at least one of Ti, Mg, V, Al, and a combination thereof,

Formula 2: $Li_{a2}Ni_{x2}Co_{y2}Ma_{z2}B2_{w2}O_{2-b2}$

wherein $0.8 \le a2 \le 1.2$, $0.8 \le x2 < 1$, $0 < y2 \le 0.2$, $0 < z2 \le 0.2$ $0 \le w2 \le 0.1$, $0 \le b2 \le 0.05$, and $0.9 \le x2+y2+z2+w2 \le 1.1$,
Ma comprises at least one of Al, Mn, and a combination thereof, and
B2 comprises at least one of Mg, Ti, V, Zr, Mo, Nb, and a combination thereof.

**2.** The positive electrode (10) as claimed in claim 1, wherein a weight ratio of the first particle (PTC1) to the second particle (PTC2) in the first positive electrode active material layer (CAL1) is in a range of 6:4 to 9:1.

**3.** The positive electrode (10) as claimed in claim 1 or 2, wherein a weight ratio of the first particle (PTC1) to the second particle (PTC2) in the second positive electrode active material layer (CAL2) is in a range of about 1:9 to about 4:6.

**4.** The positive electrode (10) as claimed in any one of claims 1 to 3, wherein the second positive electrode active material layer (CAL2) further comprises a borate-based additive.

**5.** The positive electrode (10) as claimed in any one of claims 1 to 4, wherein the second positive electrode active material layer (CAL2) further comprises a borate-based additive, wherein an amount of the borate-based additive (ADT) in the second positive electrode active material layer (CAL2) is in a range of $\geq 0.1$ wt% to $\leq 2.0$ wt% with respect to 100 wt% of the second positive electrode active material layer.

**6.** The positive electrode (10) as claimed in any one of claims 1 to 5, wherein the second positive electrode active material layer (CAL2) further comprises a borate-based additive (ADT), wherein the borate-based additive (ADT) comprises at least one of lithium difluoro(oxalato)borate (LiDFOB), lithium bis(oxalato)borate (LiBOB), lithium tetrafluoroborate ($LiBF_4$), and a combination thereof.

**7.** The positive electrode (10) as claimed in any one of claims 1 to 6, wherein the first positive electrode active material layer (CAL1) does not include the borate-based additive (ADT).

**8.** The positive electrode (10) as claimed in any one of claims 1 to 7, wherein the first positive electrode active material layer (CAL1) further comprises a first binder (BND1) and a first conductive material (CDM1), and
wherein the second positive electrode active material layer (CAL2) further comprises a second binder (BND2) and a second conductive material (CDM2).

**9.** The positive electrode (10) as claimed in any one of claims 1 to 8, wherein a thickness ratio of the first positive electrode active material layer (CAL1) to the second positive electrode active material layer (CAL2) is in a range of 30:70 to 70:30.

**10.** A rechargeable lithium battery (100) comprising a positive electrode (10), a negative electrode (20), and an electrolyte in which the positive electrode (10) and the negative electrode (20) are impregnated,
wherein the positive electrode (10) comprises:

a positive electrode current collector (COL1);
a first positive electrode active material layer (CAL1) on the positive electrode current collector (COL1); and
a second positive electrode active material layer (CAL2) on the first positive electrode active material layer (CAL1);
wherein at least one of the first and second positive electrode active material layers (CAL1, CAL2) comprises a first particle (PTC1) and a second particle (PTC2),
wherein the first particle (PTC1) comprises a compound defined by Formula 1,
wherein the second particle (PTC2) comprises a compound defined by Formula 2,
wherein a weight ratio of the first particle (PTC1) to the second particle (PTC2) in the first positive electrode active material layer (CAL1) is in a range of 6:4 to 9:1,
wherein a weight ratio of the first particle (PTC1) to the second particle (PTC2) in the second positive electrode active material layer (CAL2) is in a range of 1:9 to 4:6,

Formula 1: $Li_{a1}Mn_{z1}Fe_{x1}B1_{y1}PO_{4-b1}$

wherein $0.8 \leq a1 \leq 1.2$, $0 \leq z1 \leq 0.2$, $0.8 \leq x1 \leq 1$, $0 \leq y1 \leq 0.05$, $0 \leq b1 \leq 0.05$ and $x1+y1+z1=1$,
B1 comprises at least one of Ti, Mg, V, Al, and a combination thereof,

Formula 2: $Li_{a2}Ni_{x2}Co_{y2}Ma_{z2}B2_{w2}O_{2-b2}$

wherein $0.8 \leq a2 \leq 1.2$, $0.8 \leq x2 < 1$, $0 < y2 \leq 0.2$, $0 < z2 \leq 0.2$ $0 \leq w2 \leq 0.1$, $0 \leq b2 \leq 0.05$, and $0.9 \leq x2+y2+z2+w2 \leq 1.1$,
Ma comprises at least one of Al, Mn, and a combination thereof, and
B2 comprises at least one of Mg, Ti, V, Zr, Mo, Nb, and a combination thereof.

**11.** The rechargeable lithium battery (100) as claimed in claim 10, wherein an amount of the first particle (PTC1) in the first positive electrode active material layer (CAL1) is in a range of 55 wt% or more with respect to 100 wt% of the first positive electrode active material layer, and
wherein an amount of the second particle (PTC2) in the second positive electrode active material layer (CAL2) is in a range of 55 wt% with respect to 100 wt% of the second positive electrode active material layer or more.

**12.** The rechargeable lithium battery (100) as claimed in claim 10 or 11, wherein the second positive electrode active material layer (CAL2) further comprises a borate-based additive (ADT).

**13.** The rechargeable lithium battery (100) as claimed in any one of claims 10 to 12, wherein a thickness ratio of the first positive electrode active material layer (CAL1) to the second positive electrode active material (CAL2) is in a range of 70:30 to 30:70.

**14.** The rechargeable lithium battery (100) as claimed in any one of claims 10 to 13, wherein the electrolyte (ELL) comprises a non-aqueous organic solvent and a borate-based additive (ADT), and
wherein the borate-based additive (ADT) comprises at least one of lithium difluoro (oxalato)borate (LiDFOB), lithium bis(oxalato)borate (LiBOB), lithium tetrafluoroborate ($LiBF_4$), and a combination thereof.

**15.** The rechargeable lithium battery (100) as claimed in claim 14, wherein an amount of the borate-based additive (ADT) in the electrolyte (ELL) is in a range of $\geq 0.1$ wt% to $\leq 2.0$ wt% with respect to 100 wt% of the electrolyte.

FIG. 1

ELL
Li+
COL1 AML1
10
30
COL2 AML2
20

FIG. 2

100
60
30
40
30
10
20
50

FIG. 3
100
11
12
22
10
40
30
20
21
50

# FIG. 4

100
50
72
40
71
10
30
20

# FIG. 5

100
50
40
10
30
20
70

FIG. 6
10
PTC1
PTC2
Content of the positive electrode active material
Distance from the current collector
PTC2 PTC1
CAL2
CAL1
AML1
COL1
D3
D1

FIG. 7

CAL1
CDM1
BND1
PTC1
PTC2

FIG. 8

CAL2
CDM2
ADT
BND2
PTC1
PTC2

FIG. 9

800
Preparing Sulfide-based Solid Electrolyte
810
Preparing Surface Modifier
820
Mixing Sulfide-based Solid Electrolyte with Surface Modifier
830

# EUROPEAN SEARCH REPORT

Application Number
EP 26 15 8676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 310 942 A1 (LG ENERGY SOLUTION LTD [KR]) 24 January 2024 (2024-01-24)<br>* the whole document *<br>----- | 1-15 | INV.<br>H01M4/36<br>H01M4/131<br>H01M4/525<br>H01M4/58<br>H01M4/62<br>H01M10/0525 |
| X | CN 109 428 051 A (NINGDE CONTEMPORARY AMPEREX TECH CO LTD)<br>5 March 2019 (2019-03-05)<br>* the whole document *<br>----- | 1-15 | |

TECHNICAL FIELDS SEARCHED (IPC)

H01M

The present search report has been drawn up for all claims

| Place of search | Date of completion of the search | Examiner |
|---|---|---|
| The Hague | 21 July 2026 | Scarfiello, Canio |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 15 8676

This annex lists the patent family members relating to the patent documents cited in the above-mentioned European search report. The members are as contained in the European Patent Office EDP file on
The European Patent Office is in no way liable for these particulars which are merely given for the purpose of information.

21-07-2026

| Patent document cited in search report | Publication date | Patent family member(s) | Publication date |
|---|---|---|---|
| EP 4310942 A1 | 24-01-2024 | CN 117280486 A | 22-12-2023 |
| | | EP 4310942 A1 | 24-01-2024 |
| | | JP 7703687 B2 | 07-07-2025 |
| | | JP 2024516988 A | 18-04-2024 |
| | | KR 20230146881 A | 20-10-2023 |
| | | US 2024250259 A1 | 25-07-2024 |
| | | WO 2023200082 A1 | 19-10-2023 |
| CN 109428051 A | 05-03-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020250020861